(19) **Europäisches Patentamt**

**European Patent Office**

**Office européen des brevets**

(11) **EP 0 569 921 B1**

(12) **EUROPEAN PATENT SPECIFICATION**

(45) Date of publication and mention
of the grant of the patent:
**19.01.2000 Bulletin 2000/03**

(51) Int. Cl.⁷: **B32B 7/06**, C09J 7/02

(21) Application number: **93107618.6**

(22) Date of filing: **11.05.1993**

(54) **Self-adhesive decorative surface covering material**

Selbstklebendes, dekoratives Oberflächenbelagmaterial

Matériau décoratif et autocollant pour le revêtement de surfaces

(84) Designated Contracting States:
**AT BE CH DE ES FR GB IT LI LU NL SE**

(30) Priority: **14.05.1992 US 883034**

(43) Date of publication of application:
**18.11.1993 Bulletin 1993/46**

(73) Proprietor: **DECORA, INCORPORATED**
**Fort Edward, NY 12828-1727 (US)**

(72) Inventor: **Smith, John R.**
**Gansevoort, NY 12831 (US)**

(74) Representative:
**Gervasi, Gemma, Dr. et al**
**NOTARBARTOLO & GERVASI Srl,**
**Corso di Porta Vittoria, 9**
**20122 Milano (IT)**

(56) References cited:
**FR-A- 2 620 721**      **GB-A- 1 116 262**
**GB-A- 2 068 833**      **US-A- 3 130 113**
**US-A- 4 151 319**      **US-A- 4 767 654**

## Description

This invention relates to casting substrates, plastic films, adhesives, release substances, and temporary carriers, and the combination thereof in making up articles adapted to cover surfaces.

BACKGROUND OF THE INVENTION

Silman, U.S. Pat. No. 3,130,113, describes a multi-component composite bonded article which may be sold as a package to the housewife or any other person desiring to cover a surface, whether it be smooth, broken, straight or curved, and a method and means for producing such composite package. Such products have enjoyed wide commercial success. In such a construction, there is proposed the bonding, by a pressure sensitive adhesive, of a relatively thick, self-supporting, cast or coated poly(vinyl chloride) thermoplastic film with or without cloth, and with or without a design or decoration, to a temporary base, preferably of relatively heavy paper; the arrangement being such that when the package is to be used for the purpose intended the paper readily may be stripped off, thus exposing the pressure sensitive adhesive which remains adherent to the plastic film whereby the covering may be adhesively secured to the surface to be covered. Such laminated products have several shortcomings: they have a tendency to adhere rapidly and permanently to the structure being decorated, and do not lend themselves readily to sliding for pattern matching and seam adjustments in the hands of inexperienced installers. The relatively thick film which is applied to the surface produces an edge which shows through subsequently applied surface coatings. In other words, painting over such edges produces a visible mark. Finally, the relatively thick film does not easily adhere to porous or highly irregular substrates, making it difficult, for example, to apply to concrete block, to wood-grained siding, and to floor tiles, and the like.

Parkinson, et al, U.S. Pat. No. 3,620,366 disclose a composite structure providing a wallpaper which comprises a paper substrate having a decorative surface and coated on the back surface with a coating of a permanently tacky pressure-sensitive adhesive, the decorative surface being coated with a protective coating of a synthetic resin, the pressure-sensitive adhesive coating and the synthetic resin coating being so chosen that, in the finished wallpaper, the coating of synthetic resin on the decorative surface acts as a release coat for the adhesive. The object of such a construction is to permit self-rolling without the need for release paper, but redecoration is stated to require the wallpaper to be removed (because (i) the edges show through when painted over and (ii) the release coat over the decorative surface is almost impossible to adhere to).

Sackoff and Smith, U.K. Pat. No. 1,541,311, disclose pressure-sensitive adhesive coated laminates like the Silman laminates, mentioned above, but with much improved ease of application in that they can be positioned and, if necessary, repositioned, during the application time even if the covering has been affixed to the substrate, to facilitate removal of bubbles, to line up abutting edges, and to perfectly match patterns. This is accomplished by making a laminate of the type comprising a facing layer, generally of a decorative or protective material, and a layer of a pressure sensitive adhesive adjacent to one surface thereof, and then depositing on the surface of the pressure sensitive adhesive layer a substantially uniformly distributed, discontinuous layer of a material possessing certain controlled-release properties, for specific example, a patterned polysiloxane layer or a layer comprising small beads or droplets of the polysiloxane. Such a layer produces a relatively low peel value, i.e., a low degree of affinity for the substrate or to itself. Thus, the laminate can be moved around and it can be separated and used even if inadvertently folded upon itself during application. Ultimately, and desirably, the applied laminate develops a high degree of peel strength, with time, e.g., after about 8 hours.

Sackoff, Smith and Walling, U.S. Pat. No. 4,151,319, represents the present state-of-the art in its description of pressure sensitive adhesive coated laminates in which the material which produces a low zero-minute peel value, e.g., a polysiloxane, is intimately admixed with the adhesive prior to the adhesive being coated on the release surface. Repositioning is facilitated and, ultimately, time produces a more permanent installation. However, because a relatively thick self-supporting film is used, redecoration without leaving painted edges, and application to uneven substrates, such as concrete blocks remain as shortcomings.

Mention is also made of Riggsbee, U.S. Pat. No. 4,767,654 which describes a laminated construction useful for tags, labels and stickers, in which a self-detackifying laminate is prepared in which a resin film is attached to a casting substrate to form a composite web, and an adhesive is deposited on the resin film side of the composite web. The composite web can be affixed to a temporary release paper or to a substrate, and the casting substrate may be printed to provide a tag or coupon which may thereafter be peeled off, e.g., by a customer seeking a rebate, leaving the surface of the article dry, with a substantially transparent, non-tacky, residue exposed.

Thus, there are an abundance of decorative surface covering arrangements known to those skilled in the art. It has heretofore been widely believed, however, that an effective laminated construction had to employ a self-supporting sheet to decorate the substrate to ensure that it did not tear or stretch and deform during application. This, however, leads to a lack of adhesion to uneven substrates and to difficulty in redecorating, e.g., edges which are visible after painting, as mentioned above.

Accordingly, there exists a need for a decorative surface covering material that will securely adhere to bricks, concrete blocks, floor tiles, grained wood surfaces, and other difficult substrates, and which can be removed, if desired, during redecorating or covered over without the need to remove it, entirely at the option of the user.

## SUMMARY OF THE INVENTION

It is an object of the invention to provide a composite laminate that produces a decorative covering which adheres to most desired desired surfaces;

It is another object of the invention to provide a composite laminate that produces a decorative covering which initially does not securely adhere to any desired surface, enabling repositioning during installation, yet ultimately which will develop a secure permanent adherence to such surface;

It is another object of the invention to provide a laminated composite for producing a decorative covering having a thin paintable edge that leaves no visible edge after redecorating, yet, at the option of the user , the covering can be completely removed and the underlying surface is ready to redecorate;

It is yet another object of the invention to provide a laminated composite with a removable temporary backing, which can be self-rolled upon itself; and also a laminated composite without a temporary backing which can be self-rolled, the latter reducing disposal concerns;

It is another object of the invention to provide a laminated composite with printed decorations and indicia on the decorative covering and patterned printing including transparent areas through which the substrate can be viewed, and also decorative dry painted surfaces.

The invention for which protection is sought is defined in claims 1 to 28.

The thin resin film may be joined to the casting substrate in a number of ways. For example, it may be thermoformed into a sheet and laminated to the casting substrate. Alternatively, the thin film can be selected to have inherent poor adhesion to the respective casting substrate, i.e., polyester, polyolefins, and the like. In another useful approach the thin film coating can be modified with a lubricant that migrates to the surface and thus reduces the adhesion to a supporting substrate. This procedure is well known in the plastics industry, i.e., fatty acid amides incorporated into polyolefins, etc. Such approaches do not require the use of an optional release surface, although one may be used, if desired. When a release surface is used, it can be applied in 100 wt-% solids form, but, preferably, by deposition from an organic solvent or a water-based medium onto the casting substrate. In any case, a thermoplastic or thermosetting or UV-curable or electron-beam curable system can be used, as is well known to those skilled in this art. The amount of release force needed to separate the casting substrate from the resin film has been determined preferably to be in the range of about 2 to about 39 grams/cm width (about 5 to about 100 grams/inch width), most preferably, about 7,9 to about 23,6 grams/cm width (about 20 to about 60 grams/inch width), and the release energy level is greater than that of the release force between the casting substrate or the casting substrate optionally coated with the controlled-release coating and the resin film . The resin film is a thin, i.e., 0.75 to 25μm, non-self-supporting, i.e., it needs a backing to provide enough strength to be handled, elastomeric, i.e., stretchable, thermoplastic resin, preferably one such as an acrylic, a polyester, a polyurethane, poly(vinyl chloride), a polyamide, a rubber or a blend of any of the foregoing. The casting substrate itself may be paper or a thermoplastic film, such as polyethylene, polypropylene, polyester, polyurethane, polyacrylate, polycarbonate or a blend comprising any of the foregoing. In preferred embodiments, the adhesive is selected from the group consisting of a pressure sensitive adhesive, a water activating adhesive, and a thermoplastic heat-activatible adhesive, preferably, a pressure sensitive adhesive. The adhesive includes in intimate admixture an effective amount of a material for producing a low zero-minute peel value whereby said laminate can be easily applied to a substrate to be decorated and removed and repositioned or straightened, if necessary, and thereafter provides an increase in peel value over a time to produce a more permanent installation. Especially prefered is a pressure sensitive adhesive wherein the material for producing a low zero-minute peel value comprises a polysiloxane and said material is present in an amount comprising from about 0.001 to about 20 percent based on the solids content of the pressure sensitive adhesive.

In other features, the invention also provides printed embodiments wherein the resin film is transparent such that once the casting substrate is removed, the color or any indicia on the substrate to be decorated is evident; those wherein the resin film is transparent and the resin film side of the composite web is reverse printed in one or more layers of colors with decorative indicia prior to the application of the adhesive; those wherein the resin film side of the composite web is reverse printed in one or more colors with a pattern of decorative indicia such that transparent, unprinted areas remain whereby the color or any printed indicia in the substrate to be decorated is evident; and those wherein the film is pigmented and opaque, producing a dry painted decorative effect.

BRIEF DESCRIPTION OF THE DRAWINGS

FIG. 1 is a block diagram of the composite laminate structure according to the invention having a thin transparent film, over which printed layers (not shown) can be provided;
FIG. 2 is a perspective view of the composite laminate according to the invention, showing an optional, temporary, release backing;
FIG. 3 is a perspective view of a surface to be decorated to which is attached a composite web according to the invention with the casting substrate portion partially detached and a printed design on the thin film.
FIG. 4 is a schematic diagram of a process in accordance with the present invention.

DETAILED DESCRIPTION OF THE INVENTION

The self-adhesive decorative surface covering laminate according to the invention comprises a composite web of a thin non-self-supporting resin film deposited on and attached to a casting substrate or top sheet optionally making use of a controlled release substance. The casting substrate or top sheet in the preferred embodiment, acts as a removable protective layer and provides strength to the non-self-supporting thin resin film during processing and application. An adhesive, preferably a pressure-sensitive adhesive, is applied onto the exposed resin film side of the composite web, and is used to firmly attach the composite web to an optional temporary backing sheet or to the substrate material to be decorated itself. The resin film or foil may be applied to any surface, package, container or substance to which the composite web may be adhered using any type of adhesive suitable for attaching the composite web directly to the substrate.

The casting substrate or top sheet, may be composed of any substance that is capable of forming the composite web with the thin resin film to achieve the desired degree of attraction necessary to maintain the thin resin film on the casting substrate at the desired release force. Degree of attraction, as defined herein, is the force of attraction created between the casting substrate and resin film. Even if, as is preferred, an adhesive is not used, a certain desired release force is needed to overcome the London or dispersion force created in order to separate the casting substrate from the resin film. This can be controlled, i.e., reduced, to any desired level, if necessary, by using an optional controlled-release coating, cast, laminated or deposited from a liquid medium in the casting substrate to provide a matte or glossy finish.

Preferably, the casting substrate is paper or a thermoplastic film, preferably selected from high density polyethylene, low density polyethylene, polypropylene, polyester, polyurethane, polyacrylate, polycarbonate and SURLYN® ionomers, and it is further preferred, but not essential, that casting substrate be transparent. Printing may be applied to either or both sides of the thin resin film depending on the type of material utilized.

The resin film, which is attached onto one side of the casting substrate or top sheet, is a thin, i.e., 0.75 to 25μm (0.03 to 1.0 milli-inches) thermoplastic resin such as polyester, polyacrylate, polyurethane, polyamide, synthetic rubber, e.g., SBR, isoprenes, and the like, or a combination of such materials. The thin film typically has a weight to area ratio in the range of from about 0.1 mg/cm$^2$ to about 3.4 mg/cm$^2$. Depending on the conditions and type of resin used, the resin film may be clear, translucent or opaque. When the resin film is clear, it is possible to transmit any desired message on a backing sheet or on the substrate material to be decorated once the film or foil has been affixed.

The resin film may be applied to the casting substrate by either laminating a thermoformed film, by depositing a 100 wt-% solids resin, or by either deposition from an organic solvent or from an aqueous medium. If desired, a heat-curable, UV-curable, or electron beam-curable system can be used. Preferably, the resin film is formed by passing the casting film continuously into contact with a transfer roller bathed with the film forming material in a liquid medium under conditions appropriate to achieving a London or dispersion force that permits the casting substrate to be stripped from the resin film or foil at a desired release force. The thermoplastic resin then is sent through a conventional curing oven where it bonds to the casting substrate under elevated conditions of temperature.

Composite webs may be employed which require a very small release force to strip the casting substrate from the thin resin film, while other composite webs require large release forces. Release forces in between are all possible, depending on the strength of the London or dispersion force established between the casting substrate and thin resin film. The release force needed to overcome the London or dispersion force at the casting substrate resin/film interface, however, must be within a certain range for proper functioning of the decorative film so that the casting substrate can be stripped without at the same time stripping the film from the substance to be decorated. Thus, a low release force could possibly result in premature separation, while a high release force may create difficulties in peeling away the casting substrate. In this regard, it has been found that the composite web according to the invention preferably requires a release force ranging from about 2 to about 39 grams per cm width (about 5 to about 100 grams per inch width) to effectuate proper separation of the casting substrate from the resin film, with a preferred range being about 7,9 to about 23,6 grams per cm width (about 20 to about 60 grams per inch width). Such forces are measured in ways well known to those skilled in this art.

The achievement of the desired London or dispersion force depends upon the control of certain factors such as the temperature of the resin film solution or emulsion when contacting the casting substrate, the Corona discharge treatment of the casting substrate's surface prior to lamination, the oxidative etching of the casting substrate's surface prior to lamination, the use of a pretreatment comprising a controlled release influencing substance and the temperature used in any curing ovens. The creation of the composite web, for example, in one aspect, uses the application of an elevated temperature as demonstrated in Example 1 herein, although, as mentioned, other curing systems can be used.

The composite web may be secured to a temporary backing sheet or directly to a surface material to be decorated by means of an adhesive. Any conventional adhesive can be used, such as a water-activated adhesive, a heat-activated adhesive, a pressure sensitive adhesive, and the like. The composite web may first be secured to a backing sheet through the use of an adhesive, such as a pressure sensitive adhesive, and, after stripping off the backing sheet, the composite may be adhered to the surface material to be decorated. In the alternative, the composite web may be adhered directly to the surface material to be decorated without the use of a backing sheet. In this embodiment, the adhesive is applied directly to the resin film side of the composite web, which side is then adhered to the surface to be decorated. The side to which the adhesive is not applied may then be readily detached by applying the appropriate release force leaving the resin film or foil attached to the surface.

When a transparent resin film or foil is employed, the color and any printing, or decorative indicia contained on the backing sheet or surface to be decorated, is visible after the casting substrate is removed.

In other embodiments of the invention, a printed decoration, or a printed pattern, message or the like may be back printed on the resin film side of the composite web prior to the application of the adhesive. After the composite web is attached to the surface to be printed or to the backing sheet, removal of the casting substrate would then expose the back printed resin film bonded to the surface or to the backing sheet thereby revealing a desired message, a pleasing color, any decorative effect desired, and the like.

To adhere the composite web to the backing sheet or to the surface to be decorated, it is possible to directly apply adhesive to the resin film portion of the composite web or, in the alternative, the adhesive can be transfer coated onto the thin resin film side of the composite web by known industry techniques. It is preferable to apply the adhesive by means of direct coating. When ready to apply the composite web to the backing sheet or surface to be decorated, the release liner is pulled away enabling the application of the composite web to the backing sheet or surface to be decorated. The force required to pull the release liner from the adhesive layer should be less than the force required to remove the casting substrate from the resin film so as to avoid premature detachment of the casting substrate from the resin film or foil. Pressure sensitive adhesives are preferred, but other types of precoating adhesives suitable for use in the invention include heat activated and remoistenable adhesives.

The composite web may be converted into a decorated embodiment by subjecting the composite web either in roll or sheet form to methods of operation known in the industry for coloring, e.g., by including a pigment in the thin film resin or by inline printing and die cutting. One-color and multi-color printing machines well known to the industry may be used for this purpose. Transfer printing can also be used to decorate the thin film in ways well known to those skilled in the art

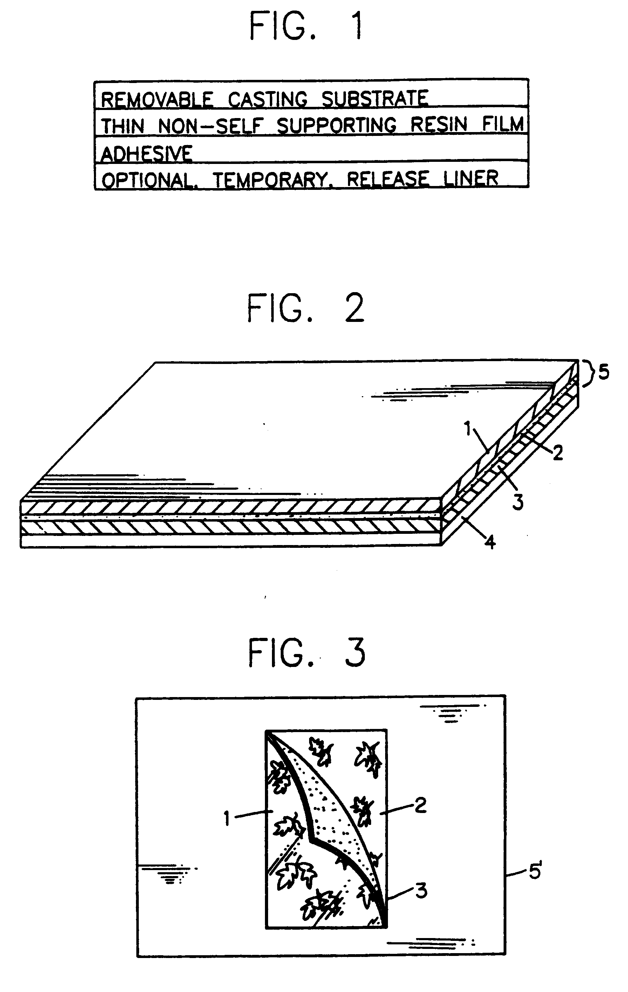

With reference to the figures, FIG. 1 displays the basic arrangement of the preferred embodiment of the invention. The removable casting substrate is attached to the thin, non-self-supporting, elastomeric resin film at a desired release force. The thin, non-self-supporting, elastomeric resin film is attached to an optional, temporary release liner by means of an adhesive, preferably a pressure sensitive adhesive. Once any optional release liner is removed, the composite web may be attached to a surface to be decorated, and, finally, the casting substrate is removed.

FIG. 2 is a perspective view of the decorative surface covering laminate according to the invention, with composite web 5 made up of casting substrate 1 and thin, non-self-supporting, elastomeric film 2 attached to a temporary backing sheet or surface to be decorated 4 by means of adhesive 3.

FIG. 3 illustrates the removal at a desired release force of the casting substrate 1 from the surface of an article to be decorated 5', with the thin, non-self-supporting, elastomeric film 2 remaining secured to the article 5' by means of adhesive 3. When the thin film 2 is composed of a clear material, or a pattern including clear, transparent areas , article 5', or selected areas thereof remains visible through the film 2 and the adhesive 3.

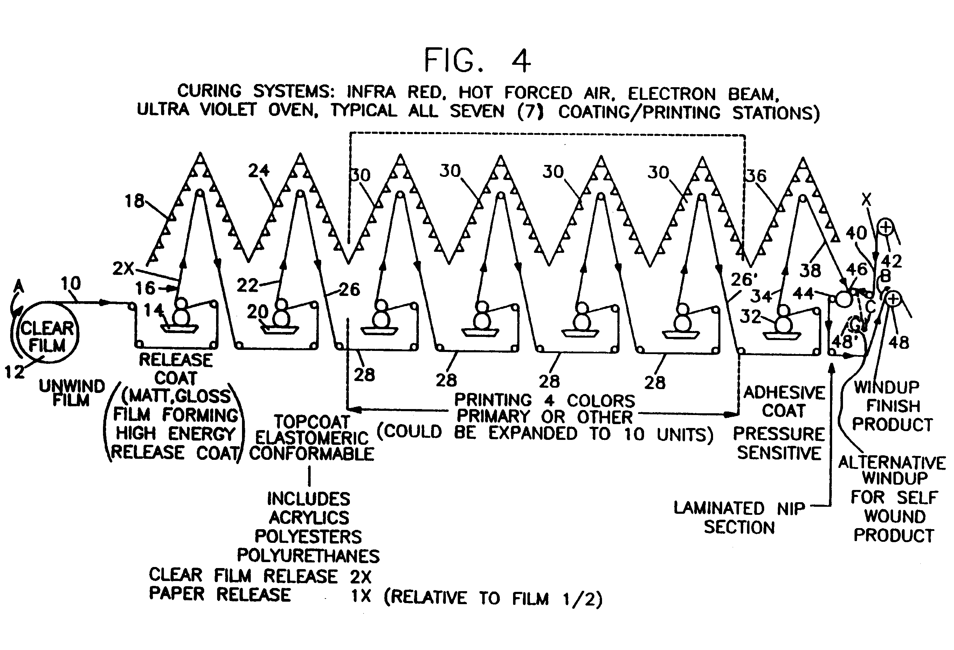

FIG. 4 shows a method for forming a laminate in accordance with the present invention comprising first coating a sheet of casting material 10, which may suitably be kraft paper or other supportive plastic sheet such as polyester, as defined hereinabove, from roll 12, which turns in the direction indicated by arrow A, optionally with a suitable controlled high energy release composition (meaning that more energy is required to remove the liner from the thin resin film compared to that energy required to remove the pressure sensitive adhesive (PSA) backing) 14 for providing a gloss or matte finish, such as, a polyolefin, or one of the other conventional materials used for this purpose.

After application of the optional controlled release composition 14, the coated casting substrate 16 is passed through oven 18 which utilizes conventional drying methods for release coating compositions. Typically, temperatures in the range from about 87,8°C to 137,8°C (190° to 280° F) for about 5 to 120 seconds are used. Typically, the optional controlled release composition 14 is a low energy polymer, e.g., a polyester and the dried and cured coating content generally is in the range of from 1.6 to 32.5 mg/dm$^2$ (0.1 lb/3000 ft$^2$ to about 2.0 lbs/3000 ft$^2$) and it has a thickness in the range from about 0.75 to 25 µm (0.03 to 1.0 milli-inches)

Thereafter, the optionally coated and dried sheet is passed into contact with a composition 20 for producing a thin, non-self-supporting elastomeric, conformable thermoplastic resin film, the coated film being thereafter passed through heated oven 24 having substantially the same design as oven 18 to produce composite web 26. Typically, temperatures in the range from about 87.8°C to 137.8°C (190 to 280° F) for about 5 to 120 seconds are used. Typically, the film forming composition 20 has a composition which will be as described hereinafter and generally the thin film produced has a thickness in the range from about 1.8 to 30.5 µm (0.07 to about 1.2 milli-inches) Generally, it is provided in an amount, based on the dry solids weight, of from about 0.25 to about 4.0 mg/cm$^2$.

Optionally, composite web 26 can be passed into contact with one or more printing or color application stations 28, each having an associated oven 30, like oven 18, for applying printing or a solid color to the resin film side of the composite web. Such techniques are well known to those skilled in this art. Furthermore, although 4 stations are shown more or less can be used, for example, from 1 to 10, depending on the number of colors desired.

Next, optionally printed composite web 26' is coated with adhesive using transfer roll/bath assembly 32. After application of the adhesive, the adhesive-coated composite web 34 is passed through oven 36 which uses conventional drying methods suitable for the adhesive employed. Typically, temperatures in the range from about 87.8°C to 137.8°C (190 to 280° F) for about 5 to 120 seconds are employed. For adhesives in the prepolymer form, a curing treatment is generally required. Such treatments are conventional in the art and may utilize heat and/or other means to effect curing. Typically, adhesive layer 34 has a composition which will be as described hereinafter and generally the adhesive layer produced has a thickness in the range from 1.8 to about 30.5 µm (about 0.07 to about 1.2 milli-inches). Generally, it is coated in an amount, based on the dry solids weight, of from about 0.25 to about 4.0 mg/cm$^2$.

Thereafter, the thus coated and cured adhesive coated composite web designated as 38 is optionally married to temporary backing layer 40, such as a conventional silicone-coated kraft paper, unrolled from roll 42. The two layers are married by passing through nip rolls 44 and 46 in a manner well known in the art. The pressure of nip rolls 44, 46 generally ranges from about 1.4 to 4.2 kg/cm$^2$ (20 to 60 psi). Thereafter, the finished laminate is rolled onto roll 48 which revolves in the direction indicated by arrow B. Alternatively, for a self-wound product, temporary backing layer 40 is not applied, but instead composite web 38 is rolled onto optional windup roller 48' shown by broken lines in FIG. 4 which revolves in the direction indicated by arrow C. In a preferred embodiment, a 2-X sided release substrate made in accordance with the above detailed description can be used to make the self-wound product in the same apparatus.

DESCRIPTION OF THE PREFERRED EMBODIMENTS

The invention is described in further detail by the following examples.

EXAMPLE 1

Using an apparatus as generally shown in FIG. 4, six casting substrates are provided with a thin water-based polyester film. The casting substrates are as follows:

| Substrate | Thickness | Surface | Treatment |
|---|---|---|---|
| PET[a] 89 MICROM | 3.5 mils | High Gloss | Uncoated--None |
| PP[b] 89 MICROM | 3.5 mils | High Gloss | Uncoated--None |
| PET 102 MICROM | 4.0 mils | Semi Gloss | Low energy polyester matte coating[c] |
| PET 102 MICROM | 4.0 mils | Dull Gloss | Flat coating[d] |
| PP 102 MICROM | 4.0 mils | Dull Gloss | Flat coating |
| Paper 102 MICROM | 4.0 mils | Dull Gloss | Flat coating |

a--poly(ethylene terephthalate)
b--polypropylene
c--applied from an aqueous medium in pan 14, FIG.4
d--high energy polyester coating applied from an aqueous medium in pan 14, FIG.4

With respect to treatments under footnotes c and d, they are cured at about 176.67°C to 204.44°C (350° to 400°F) for about one minute. The weight of the release coatings is in the range of 4 to 64 mg/cm$^2$ (0.25 lb/3000 ft$^2$ to 4.0 lbs/3000 ft$^2$).

The coated casting substrates are next provided on one surface with a thin, non-self-supporting elastomeric, conformable film layer comprising the following:

| Resin | Composition/Properties |
|---|---|
| Polyester | Water based (25-60% solids) |
| | 100% Modulus 70-482 kg/cm$^2$ (1000-6000 psi (free film) |
| | Tensile strength 211-562 kg/cm$^2$ (3000-8000) psi (free film) |
| | Elongation 100-400% (free film) |
| Polyacrylate | Elongation about 200% (free film) |
| Polyurethane | Elongation about 200% (free film) |

To produce composite webs, the resin films are deposited on the casting substrates from solutions in pan 20 in the apparatus shown schematically in FIG. 4. After drying the films at 176.67°C to 204.44°C (350° to 400°F) for about 60 seconds, transparent elastomeric, conformable layers of about 0.75 to about 25 microm (0.03 milli-inches to 1.0 milli-inches) in thickness are obtained.

The resin side of the composite web is reverse printed in the apparatus of FIG. 4 using in the pans of two printing stations 28 two colors of green, the printing comprising a leafy pattern which also includes unprinted transparent areas in the shape of leaves.

The composite webs are next coated on the reverse printed resin side with a water based pressure sensitive adhesive comprising a copolymeric acrylic-vinyl acetate aqueous emulsion, 50% solids, 480 cps (#3 spindle), as described in U.S. Patent No. 4,151,319. The adhesive is contained in the pan under and bathing roller 32 in the apparatus of FIG. 4. The coated composite is dried at about 115.56°C (240° F) for about 5-10 seconds to yield a dry deposit of pressure sensitive adhesive of from about 1 to 2 milligrams per square centimeter.

If the thin film is adhered to one of the casting substrates to which it has inherently poor adhesion, e.g., glossy polyester, glossy polypropylene, or a release paper it can be self-wound and then later unwound for use.

On the other hand, if the thin film has higher adhesion to the casting substrate, the adhesive coated side of the resulting laminate is next married to a release sheet prepared from kraft paper 19kg per ream (42 pounds per ream) coated by the procedure of U.S. Patent No. 4,151,319, Example 1, with a conventional silicone release finish, e.g., Dow Corning Syloff 23 with DC 23A catalyst to an amount of about 227g per ream (0.5 pounds per ream).

The release values between the printed thin conformable resin films and the polymeric or paper casting substrates and between the pressure sensitive layer and the polymeric or paper casting substrates and between the pressure sensitive adhesive layer and the bonding substrate is expressed in g/cm (gm/inch) width and is measured on an Instron Tester at a rate of 30,48 cm/minute (12 inches/minute) and an angle of 180 degrees. The release values obey the following general relationship:

Thin Film + Liner > Pres. Sens. Adhes. + Liner < Pres. Sens. Adhes. + Bonding (Mounting) Substrate

It is preferred but not essential for the thin film release from its liner to be a higher value than that of the pressure sensitive adhesive from its liner but it is essential that both the thin flim release from its liner and the pressure sensitive adhesive release from its liner both be lower than the pressure sensitive adhesive release from the bonding substrate. Typically, values obtained from the Examples described above are as follows:

Thin Film: 7.87 g/cm (20 gms/inch) width
Pressure Sensitive Adhesive: 3.96 g/cm (10 gms/inch) width
Bonding substrate: 78.7 g/cm (200 gms/inch) width

To demonstrate the use of above described construction as a surface decorating material, the laminate is unwound, and the temporary backing layer (if such is present) is peeled away from the adhesive layer. The adhesive coated composite is next applied to white wallboard. The casting substrate is then peeled away and discarded, leaving behind adhesively attached to the board a thin film of decorated thin resin film having a leafy printed design and also a pattern of white leaves because the white wallboard is seen through transparent areas of the film. The film is so thin that an overpainted edge is essentially invisible.

EXAMPLE 2

In another way of proceeding, an adhesive coating is prepared as described in Example 1. This coating is then applied to the resin film side of the polyester casting substrate/polyester film composite web from Example 1. This time, no temporary release liner is applied, but instead, the controlled release coating is applied to the casting substrate of the composete web and the laminate is self-wound upon itself. To demonstrate utility, the roll is unwound and positioned and the adhesive layer used to bond the composite web to a piece of wallboard. The polyester casting substrate is peeled away and discarded, leaving behind the thin decorated polyester film adhered to the board by the pressure sensitive adhesive.

EXAMPLE 3

Self-adhesive surface decorating laminates are constructed in a manner similar to those of Examples 1 and 2 using non-self-supporting films made from poly(vinyl chloride), poly(acrylate), styrene-butadiene copolymer rubber and poly(isobutylene). These coatings are but a few of the many combinations and coatings one may use for this product. The release values of the resin films from the casting substrates are such that the casting substrates can be stripped from the resin films after they have been applied to the surfaces to be decorated without at the same time removing the films from the wallboard.

The Patents and any publications and test methods cited hereinabove are incorporated herein by reference.

While there have been described what are presently believed to be preferred embodiments of the invention, it will be apparent to a person skilled in the art that numerous changes can be made in the ingredients, conditions and proportions set forth in the foregoing embodiments. For example, instead of a pressure-sensitive adhesive, a water-activatable adhesive or a heat- activatable adhesive can be used. Instead of a polyester, polypropylene or paper casting substrate, one made of polyurethane, polyacrylate, polycarbonate, or the like, can be used. Instead of printing the film, it can be left clear or transparent. Instead of curing with heat, ultraviolet-light-activated and electron beam-activated curable coating systems can be used. All such obvious modifications can be employed without departing from the invention as described herein and as defined in the appended claims.

**Claims**

1. A self-adhesive decorative surface covering laminate in sheet form for walls, shelves, furniture, home furnishing, flooring and the like, comprising a casting substrate, a thermoplastic resin film attached to the casting substrate to form a composite web and an adhesive situated on the resin side of the composite web, characterized in that

   - it further comprises, optionally, a controlled-release surface on said casting substrate (1) providing a matter or glossy finish and adapted to control the surface energy of release of the first layer subsequently applied to said casting substrate (1);
   - said thermoplastic resin film (2) is a non-self-supporting, elastomeric resin film comprising a layer or layers on the casting substrate (1) and attached thereto by means comprising attraction forces between said resin film (2) and said casting substrate (1) or said casting substrate (1) having a controlled-release surface to form a composite web (5), said resin film (2) having a thickness of from 0.75 to 25 μm, said resin film (2) bearing no visible edges after redecorating; in that said adhesive (4) includes in intimate admixture an effective amount of a material for producing a low zero minute peel value whereby said laminate can be easily applied to a substrate to be decorated and removed and repositioned or straightened, if necessary, and thereafter provides an increase in peel value over time to provide that said adhesive (4) has an ultimate release energy level greater than the attraction forces between said resin film (2) and said casting substrate (1) or said casting substrate (1) having said controlled-release surface, said adhesive (4) being situated on the resin film side of said composite web (5) opposite said casting substrate (1); and in that
   - it further comprises, optionally, a temporary backing in contact with said adhesive (4), said backing being adapted subsequently to be stripped from contact with said adhesive (4), whereby said composite web (5) is suitable for mounting on a substrate to be decorated, after first having stripped any optional temporary backing therefrom, and said casting substrate (1) may, at the option of the user, be separated from said resin film (2) at a release force that effectuates such separation, without, at the same time, stripping said resin film (2) from the substrate to be decorated, and said resin film (2) may be overcoated with one or more abrasion-resistant coatings.

2. The laminate as defined in Claim 1 which is self- wound and does not include said optional temporary backing, said adhesive (4) being further characterized by having a bonding energy of adhesion of a lower value than that of the side of said casting substrate (1) which is not covered by said resin film (2), whereby when rolled upon itself said adhesive (4) remains on said resin film (5) without transferring to the non-resin film side of said composite web (5).

3. The laminate as defined in Claim 1 characterized in that it is not self-wound and in that it includes said optional temporary backing.

4. The laminate as defined in Claim 1 wherein said casting substrate (1) comprises paper or a polymer film.

5. The laminate as defined in Claim 4, wherein said polymer is selected from polyethylene, polypropylene, poly(vinyl chloride), polyester, polyurethane, polyacrylate, polycarbonate, polyamide, synthetic rubber or a blend comprising any of the foregoing.

6. The laminate as defined in Claim 1 wherein said release force between said casting substrate (1) or said casting substrate (1) having said controlled-release surface and said resin film (2) is about 2 to about 39 grams per cm (5 to about 100 grams per inch) width, and the adhesion energy level of said adhesive (4) is greater than the release force between said casting substrate (1) or said casting substrate (1) having said controlled-release surface and said resin film (2).

7. The laminate as defined in Claim 6 wherein said release force between said casting substrate (1) or said casting substrate (1) optionally having said controlled-release surface and said resin film (2) is about 7.9 to about 23,6 grams per cm (20 to about 60 grams per inch) width.

8. The lamiante as defined in Claim 1 wherein said adhesive (4) is selected from the group consisting of a pressure sensitive adhesive, a heat activated adhesive, and a remoistenable adhesive.

9. The laminate as defined in Claim 1, wherein said material for producing a low zero-minute peel value comprises a polysiloxane and said material is present in an amount comprising from about 0.001 to about 20 percent based on the solids content of said pressure sensitive adhesive.

10. The lamiante as defined in Claim 1, wherein said resin film (2) comprises an acrylic, a polyester, poly(vinyl chloride), a synthetic rubber, a polyurethane, or a mixture of any of them, deposited from an organic solvent or a water-based medium onto said casting substrate (1) and cured by heat, electron beams or ultra-violet light.

11. The laminate as defined in Claim 1, wherein said resin film (2) is transparent such that once said casting substrate (1) is removed, the color or any indicia on the substrate to be decorated is evident.

12. The laminate as defined in Claim 1, wherein said resin film (2) is transparent and the resin film side of said composite web (5) is reverse printed in one or more colors with decorative indicia prior to the application of said adhesive (4).

13. The laminate as defined in Claim 12, wherein said resin film side of the composite web (5) is reverse printed in one or more colors with a pattern of decorative indicia such that transparent, unprinted areas remain whereby the color or any printed indicia in said substrate to be decorated is evident.

14. The laminate as defined in Claim 1 wherein said resin film (2) is a solid pigmented opaque thin film and the decorated surface has the appearance of a dry paint.

15. A process for the preparation of a self-adhesive decorative surface covering laminate in sheet form for walls, shelves, furniture, home furnishing, flooring and the like, comprising a casting substrate, a thermoplastic resin film attached to the casting substrate to form a composite web and an adhesive situated on the resin side of the composite web, characterized by comprising the steps of:

    (a) providing a casting substrate (1);
    (b) optionally, providing a controlled-release surface on said casting substrate (1) either by providing a glossy finish, a matte finish or a release coating, said surface being adapted to control the surface energy of release of the layer subsequently applied to said casting substrate (1);

(c) attaching a non-self-supporting, elastomeric thermoplastic resin film (2) comprising a layer or layers deposited from a liquid medium onto one side of said casting substrate (1) to form a composite web (5) by means comprising attraction forces between said resin film (2) and said casting substrate (1) or said casting substrate (1) having said controlled-release surface under conditions that permit the separation of said casting substrate (1) from the resin film (2) upon the application of a release force, said resin film (2) having a thickness of from 0.75 to 25 μm;

(d) applying an adhesive (4) to the resin film side of the composite web (5) opposite said casting substrate (1), said adhesive including in intimate admixture an effective amount of a material for producing a low zero minute peel value whereby said laminate can be easily applied to a substrate to be decorated and removed and repositioned or straightened, if necessary, and thereafter provides an increase in peel value over time to provide that said adhesive (4) has an ultimate release energy level greater than the attraction forces between said resin film (2) and said casting substrate (1) or said casting substrate (1) having said controlled release surface; and

(e) optionally, applying a temporary backing in contact with said adhesive (4), said backing being adapted subsequently to be stripped from contact with the adhesive (4);

whereby said composite web (5) is suitable for mounting on a substrate to be decorated, after first having stripped any optional backing therefrom, and said casting substrate (1) may, at the option of the user, be separated from said resin film (2) at a release force that effectuates such separation, without, at the same time, stripping said resin film (2) from the substrate to be decorated, and said resin film (2) may be overcoated with one or more abrasion resistant coatings.

16. The process of Claim 15 wherein said laminate produced is self-wound and does not include said optional temporary backing, said adhesive (4) being further characterized by having a bonding energy of adhesion of a lower value than that of the side of said casting substrate (1) which is not covered by said resin film (2), whereby when rolled upon itself said adhesive (4) remains on said resin film (2) without transferring to the non-resin film side of said composite web (5).

17. The process of Claim 15 wherein said laminate is not self-wound and includes said temporary backing.

18. The process as defined in Claim 15, wherein said casting substrate (1) comprises paper or a polymer film.

19. The process as defined in Claim 18, wherein said polymer is selected from polyethylene, polypropylene, poly(vinyl chloride), polyester, polyurethane, polyacrylate, polycarbonate, polyamide, a synthetic rubber or a blend comprising any of the foregoing.

20. The process as defined in Claim 15, wherein said release force between said casting substrate (1) or said casting substrate (1) having said controlled-release surface and said resin film (2) is about 2 to about 39 grams per cm (5 to about 100 grams per inch) width, and the adhesion energy level of said adhesive (4) is greater than the release force between said casting substrate (1) and said resin film (2).

21. The process as defined in Claim 20, wherein said release force between said casting substrate (1) and said resin film (2) is about 7.9 to 23.6 grams per cm (20 to about 60 grams per inch) width.

22. The process as defined in Claim 15, wherein said adhesive (4) is selected from the group consisting of a pressure sensitive adhesive, a heat-activatible adhesive, and a water-moistenable adhesive.

23. The process as defined in Claim 15, wherein said material for producing a low zero-minute peel value comprises a polysiloxane and said material is present in an amount comprising from about 0.001 to about 20 percent based on the solids content of the pressure sensitive adhesive.

24. The process as defined in Claim 15, wherein said resin film (2) comprises an acrylic, a polyester, poly(vinyl chloride), a rubber, a polyurethane, or a mixture of any of them, deposited from an organic solvent or a water-based medium onto the casting substrate (1) or the casting substrate (1) having said controlled-release surface and cured by heat, electron beams or ultra-violet light.

25. The process as defined in Claim 15, wherein said resin film (2) is transparent such that once said casting substrate (1) is removed, the color or any printed indicia on the substrate to be decorated is evident.

26. The process as defined in Claim 15, wherein said resin film is transparent and said resin film side of said composite web (5) is reverse printed in one or more colors with decorative indicia prior to the application of said adhesive (4).

27. The process as defined in Claim 26, wherein said resin film side of said composite web (5) is reverse printed in one or more colors with a pattern of decorative indicia such that transparent, unprinted areas remain whereby the color or any printed indicia in said substrate to be decorated is evident.

28. The process as defined in Claim 15, wherein said resin film (2) is a solid pigmented opaque thin film and said decorative surface has the appearance of dry paint.

**Patentansprüche**

1. Selbstklebendes dekoratives Oberflächenbelag-Laminat in Folienform für Wände, Regale, Möbel, Wohnungs-Einrichtungen, Bodenbeläge und dgl., das ein Abdeckungs-Substrat, einen thermoplastischen Harzfilm, der an dem Abdeckungs-Substrat haftet unter Bildung einer Verbundbahn, und einen Klebstoff, der auf der Harzseite der Verbundbahn angeordnet ist, umfaßt, dadurch gekennzeichnet, daß

- es außerdem umfaßt: gegebenenfalls eine kontrollierte Abzieh-Oberfläche auf dem genannten Abdeckungs-Substrat (1), die ein mattes oder glänzendes Finish verleiht und die Oberflächenabzugsenergie der ersten Schicht nach dem Aufbringen auf das genannte Abdeckungs-Substrat (1) kontrollieren (steuern) kann;
- der genannte thermoplastische Harzfilm (2) ein nicht-selbsttragender elastomerer Harzfilm ist, der eine oder mehrere Schichten auf dem Abdeckungs-Substrat (1) aufweist und mittels der Anziehungskräfte zwischen dem genannten Harzfilm (2) und dem genannten Abdeckungs-Substrat (1) oder dem genannten Abdeckungs-Substrat (1), das eine kontrollierte Abzieh-Oberfläche aufweist, daran haftet unter Bildung einer Verbundbahn (5), wobei der genannte Harzfilm (2) eine Dicke von 0,75 bis 25 μm hat und nach dem Umdekorieren keine sichtbaren Ränder trägt;
- der genannte Klebstoff (4) in inniger Mischung eine wirksame Menge eines Materials zur Erzielung eines niedrigen 0 Minuten-Abzugswerts enthält, wodurch das genannte Laminat leicht auf das zu dekorierende Substrat aufgebracht und entfernt und erforderlichenfalls umpositioniert oder ausgerichtet werden kann und danach einen Anstieg des Abziehwertes mit dem Ablauf der Zeit ergibt, um zu bewirken, daß der genannte Klebstoff (4) eine End-Abzugsenergie aufweist, die größer ist als die Anziehungskräfte zwischen dem genannten Harzfilm (2) und dem genannten Abdeckungs-Substrat (1) oder dem genannten Abdeckungs-Substrat (1), das eine kontrollierte Abzieh-Oberfläche aufweist, wobei der genannte Klebstoff (4) auf der Harzfilmseite der genannten Verbundbahn (5) gegenüber dem genannten Abdeckungs-Substrat (1) angeordnet ist; und
- es außerdem umfaßt gegebenenfalls einen temporären Träger im Kontakt mit dem genannten Klebstoff (4), wobei der genannte Träger anschließend aus dem Kontakt mit dem genannten Klebstoff (4) abgezogen werden kann, so daß die genannte Verbundbahn (5) auf ein zu dekorierendes Substrat aufgebracht werden kann, nachdem vorher ein gegebenenfalls vorhandener temporärer Träger davon abgezogen worden ist, und das genannte Abdeckungs-Substrat (1), falls von dem Benutzer gewünscht, von dem genannten Harzfilm (2) mit einer Abziehkraft entfernt werden kann, welche die Trennung bewirkt, ohne daß gleichzeitig der genannte Harzfilm (2) von dem zu dekorierenden Substrat abgezogen wird, und der genannte Harzfilm (2) mit einem oder mehreren abriebsbeständigen Überzügen beschichtet werden kann.

2. Laminat nach Anspruch 1, das selbstaufrollend ist und den genannten temporären Träger nicht enthält, wobei der genannte Klebstoff (4) ferner dadurch gekennzeichnet ist, daß der eine Adhäsions-Bindungsenergie eines niedrigeren Wertes aufweist als derjenige auf der Seite des genannten Abdeckungs-Substrats (1), das nicht mit dem genannten Harzfilm (2) beschichtet ist, wodurch beim Selbstaufrollen der genannte Klebstoff (4) auf dem genannten Harzfilm (5) verbleibt, ohne auf die harzfreie Filmseite der genannten Verbundbahn (5) übertragen zu werden.

3. Laminat nach Anspruch 1, dadurch gekennzeichnet, daß es nicht selbstaufrollend ist und daß es den genannten optionalen temporären Träger aufweist.

4. Laminat nach Anspruch 1, worin das Abdeckungs-Substrat (1) Papier oder einen Polymerfilm umfaßt.

5. Laminat nach Anspruch 4, worin das genannte Polymer ausgewählt wird aus Polyethylen, Polypropylen, Poly(vinylchlorid), Polyester, Polyurethan, Polyacrylat, Polycarbonat, Polyamid, synthetischem Kautschuk oder einer Mischung beliebiger der obengenannten Materialien.

6. Laminat nach Anspruch 1, worin die genannte Abziehkraft zwischen dem genannten Abdeckungs-Substrat (1) oder dem genannten Abdeckungs-Substrat (1), das die genannte kontrollierte Abzieh-Oberfläche aufweist, und dem genannten Harzfilm (2) etwa 2 bis etwa 39 g/cm (5-100 g/inch) Breite beträgt und der Adhäsionsenergie-Wert des genannten Klebstoffes (4) größer ist als die Abziehkraft zwischen dem genannten Abdeckungs-Substrat (1) oder dem genannten Abdeckungs-Substrat (1), das die genannte kontrollierte Abzieh-Oberfläche aufweist, und dem genannten Harzfilm (2).

7. Laminat nach Anspruch 6, worin die genannte Abziehkraft zwischen dem genannten Abdeckungs-Substrat (1) oder dem genannten Abdeckungs-Substrat (1), das gegebenenfalls die genannte kontrollierte Abzieh-Oberfläche aufweist, und dem genannten Harzfilm (2) etwa 7,9 bis etwa 23,6 g/cm (20-60 g/inch) Breite beträgt.

8. Laminat nach Anspruch 1, worin der genannte Klebstoff (4) ausgewählt wird aus der Gruppe, die besteht aus einem selbstklebenden (druckempfindlichen) Klebstoff, einem durch Wärme aktivierbaren Klebstoff und einem wiederanfeuchtbaren Klebstoff.

9. Laminat nach Anspruch 1, worin das genannte Material zur Erzielung eines niedrigen 0 Minuten-Abziehwertes ein Polysiloxan umfaßt und das genannte Material in einer Menge vorliegt, die etwa 0,001 bis etwa 20 %, bezogen auf den Feststoffgehalt des genannten selbstklebenden Klebstoffes, beträgt.

10. Laminat nach Anspruch 1, worin der genannte Harzfilm (2) umfaßt ein Acrylharz, einen Polyester, Poly(vinylchlorid), einen synthetischen Kautschuk, ein Polyurethan oder eine Mischung beliebiger dieser Materialien, der aus einem organischen Lösungsmittel oder einem Medium auf Wasserbasis auf dem genannten Abdeckungs-Substrat (1) abgeschieden worden ist und der durch Wärme, Elektronenstrahlen oder ultraviolettes Licht gehärtet worden ist.

11. Laminat nach Anspruch 1, worin der genannte Harzfilm (2) transparent ist, so daß dann, wenn das Abdeckungs-Substrat (1) einmal entfernt worden ist, die Farbe oder irgendein Muster auf dem zu dekorierenden Substrat sichtbar ist.

12. Laminat nach Anspruch 1, worin der genannte Harzfilm (2) transparent ist und die Harzfilmseite der genannten Verbundbahn (5) mit einem Reverse-Aufdruck in einer oder mehreren Farben mit dekorativen Mustern vor dem Aufbringen des genannten Klebstoffes (4) versehen worden ist.

13. Laminat nach Anspruch 12, worin die genannte Harzfilmseite der Verbundbahn (5) mit einem Reverse-Aufdruck in einer oder mehreren Farben mit einem Muster von dekorativen Zeichnungen in der Weise versehen ist, daß transparente, unbedruckte Flächen verbleiben, so daß die Farbe oder irgendwelche aufgedruckten Muster in dem zu dekorierenden Substrat sichtbar sind.

14. Laminat nach Anspruch 1, worin der genannte Harzfilm (2) ein solider pigmentierter opaker dünner Film ist und die dekorierte Oberfläche das Aussehen eines trockenen Farbanstriches hat.

15. Verfahren zur Herstellung eines selbstklebenden, dekorativen Oberflächebelag-Materials in Folien-Form für Wände, Regale, Möbel, Wohnungs-Einrichtungen, Bodenbeläge und dgl., das umfaßt ein Abdeckungs-Substrat, einen thermoplastischen Harzfilm, der an dem Abdeckungs-Substrat haftet unter Bildung einer Verbundbahn, und einen Klebstoff, der auf der Harzseite der Verbundbahn angeordnet ist, dadurch gekennzeichnet, daß es die folgenden Stufen umfaßt:

(a) das Bereitstellen eines Abdeckungs-Substrats (1);
(b) gegebenenfalls das Bereitstellen einer kontrollierten Abzieh-Oberfläche auf dem genannten Abdeckungs-Substrat (1) entweder durch Aufbringen eines glänzenden Finish, eines matten Finish oder eines Abzieh-Überzugs, wobei die genannte Oberfläche die Abzieh-Oberflächenenergie der Schicht nach dem Aufbringen auf das genannte Abdeckungs-Substrat (1) kontrollieren (steuern) kann;
(c) das Befestigen eines nicht-selbsttragenden, elastomeren thermoplastischen Harzfilms (2), der eine oder mehrere Schichten aufweist, die aus einem flüssigen Medium auf einer Seite des genannten Abdeckungs-Substrats (1) abgeschieden worden sind, daran unter Bildung einer Verbundbahn (5) mittels der Anziehungskräfte zwischen dem genannten Harzfilm (2) und dem genannten Abdeckungs-Substrat (1) oder dem genannten Abdeckungs-Substrat (1), das die genannte kontrollierte Abzieh-Oberfläche aufweist, unter solchen Bedingungen, daß sie die Trennung des genannten Abdeckungs-Substrats (1) von dem Harzfilm (2) bei Anwendung einer Abziehkraft erlauben, wobei der genannte Harzfilm (2) eine Dicke von 0,75 bis 25 µm aufweist;

(d) das Aufbringen eines Klebstoffs (4) auf die Harzfilmseite der Verbundbahn (5), die dem genannten Abdeckungs-Substrat (1) gegenüberliegt, wobei der genannte Klebstoff in innigem Gemisch eine wirksame Menge eines Materials enthält zur Erzielung eines niedrigen 0 Minuten-Abziehwertes, wodurch das genannte Laminat leicht auf ein zu dekorierendes Substrat aufgebracht und erforderlichenfalls entfernt und neu positioniert oder ausgerichtet werden kann und danach eine Zunahme des Abzieh-Wertes mit dem Ablauf der Zeit ergibt, so daß der genannte Klebstoff (4) einen End-Abziehenergiewert aufweist, der größer ist als die Anziehungskräfte zwischen dem genannten Harzfilm (2) und dem genannten Abdeckungs-Substrat (1) oder dem genannten Abdeckungs-Substrat (1), das die genannte kontrollierte Abzieh-Oberfläche aufweist; und

(e) gegebenenfalls das Aufbringen eines temporären Trägers im Kontakt mit dem genannten Klebstoff (4), wobei der genannte Träger anschließend aus dem Kontakt mit dem Klebstoff (4) abgezogen werden kann;

so daß die genannte Verbundbahn (5) auf ein zu dekorierendes Substrat aufgebracht werden kann, nachdem vorher irgendein gegebenenfalls vorhandener Träger davon abgezogen worden ist, und das genannte Abdeckungs-Substrat (1), falls vom Benutzer gewünscht, von dem genannten Harzfilm (2) getrennt werden kann unter Anwendung einer Abziehkraft, die diese Trennung bewirkt, ohne daß gleichzeitig der genannte Harzfilm (2) von dem zu dekorierenden Substrat abgezogen wird, und der genannte Harzfilm (2) mit einem oder mehreren abriebsbeständigen Überzügen beschichtet werden kann.

16. Verfahren nach Anspruch 15, worin das gebildete Laminat selbstaufrollend ist und den genannten optionalen temporären Träger nicht aufweist, wobei der genannte Klebstoff (4) ferner dadurch gekennzeichnet ist, daß er eine Adhäsions-Bindungsenergie mit einem niedrigeren Wert als diejenige auf der Seite des genannten Abdeckungs-Substrats (1), das von dem genannten Harzfilm (2) nicht bedeckt ist, aufweist, wodurch beim Selbstaufrollen der genannte Klebstoff (4) auf dem genannten Harzfilm (2) verbleibt, ohne auf die Harzfilm-freie Seite der genannten Verbundbahn (5) übertragen zu werden.

17. Verfahren nach Anspruch 15, worin das genannte Laminat nicht selbstaufrollend ist und den genannten temporären Träger aufweist.

18. Verfahren nach Anspruch 15, worin das genannte Abdeckungs-Substrat (1) Papier oder einen Polymerfilm umfaßt.

19. Verfahren nach Anspruch 18, worin das genannte Polymer ausgewählt wird aus Polyethylen, Polypropylen, Poly(vinylchlorid), Polyester, Polyurethan, Polyacrylat, Polycarbonat, Polyamid, einem synthetischen Kautschuk oder einer Mischung beliebiger der obengenannten Materialien.

20. Verfahren nach Anspruch 15, worin die genannte Abziehkraft zwischen dem genannten Abdeckungs-Substrat (1) oder dem genannten Abdeckungs-Substrat (1), das eine kontrollierte Abzieh-Oberfläche aufweist, und dem genannten Harzfilm (2) etwa 2 bis etwa 39 g/cm (5-100 g/inch) Breite beträgt und der Adhäsionsenergiewert des genannten Klebstoffes (4) größer ist als die Abziehkraft zwischen dem genannten Abdeckungs-Substrat (1) und dem genannten Harzfilm (2).

21. Verfahren nach Anspruch 20, worin die genannte Abziehkraft zwischen dem genannten Abdeckungs-Substrat (1) und dem genannten Harzfilm (2) etwa 7,9 bis 23,6 g/cm (20-60 g/inch) Breite beträgt.

22. Verfahren nach Anspruch 15, worin der genannte Klebstoff (4) ausgewählt wird aus der Gruppe, die besteht aus einem selbstklebenden Klebstoff, einem durch Wärme aktivierbaren Klebstoff und einem mit Wasser anfeuchtbaren Klebstoff.

23. Verfahren nach Anspruch 15, worin das genannte Material zur Erzielung eines niedrigen 0 Minuten-Abziehwertes ein Polysiloxan umfaßt und das genannte Material in einer Menge vorliegt, die etwa 0,001 bis etwa 20 %, bezogen auf den Feststoffgehalt des selbstklebenden Klebstoffes, beträgt.

24. Verfahren nach Anspruch 15, worin der genannte Harzfilm (2) umfaßt ein Acrylharz, einen Polyester, Poly(vinylchlorid), einen Kautschuk, ein Polyurethan oder eine beliebige Mischung derselben, der aus einem organischen Lösungsmittel oder einem Medium auf Wasserbasis auf dem Abdeckungs-Substrat (1) oder auf dem Abdeckungs-Substrat (1), das die genannte kontrollierte Abzieh-Oberfläche aufweist, abgeschieden und mittels Wärme, Elektronenstrahlen oder ultraviolettem Licht gehärtet worden ist.

25. Verfahren nach Anspruch 15, worin der genannte Harzfilm (2) transparent ist, so daß dann, wenn das genannte Abdeckungs-Substrat (1) einmal entfernt wird, die Farbe oder irgendein Muster, das auf das zu dekorierende Substrat aufgedruckt worden ist, sichtbar ist.

26. Verfahren nach Anspruch 15, worin der genannte Harzfilm transparent ist und die genannte Harzfilmseite der genannten Verbundbahn (5) mit einem Reverse-Aufdruck in einer oder mehreren Farben mit dekorativen Mustern versehen worden ist vor dem Aufbringen des genannten Klebstoffs (4).

27. Verfahren nach Anspruch 26, worin die genannte Harzfilmseite der genannten Verbundbahn (5) mit einem Reverse-Aufdruck in einer oder mehreren Farben mit einem Muster von dekorativen Zeichnungen so versehen worden ist, daß transparente unbedruckte Flächen verbleiben, so daß die Farbe oder irgendwelche aufgedruckten Muster in dem zu dekorierenden Substrat sichtbar sind.

28. Verfahren nach Anspruch 15, worin der genannte Harzfilm (2) ein solider pigmentierter opaker dünner Film ist und die genannte dekorative Oberfläche das Aussehen eines trockenen Farbanstriches hat.

**Revendications**

1. Stratifié autocollant de couverture de surfaces décoratives sous forme d'une feuille pour des murs, des étagères, des meubles, l'ameublement d'une maison, le sol et analogues, comprenant un substrat de coulée, un film de résine thermoplastique fixé sur le substrat de coulée de façon à former une nappe composite et un adhésif placé du côté résine de la nappe composite, caractérisé en ce que

   - il comprend en outre, éventuellement, une surface à anti-adhérence réglée sur ledit substrat de coulée (1) fournissant un fini plus mat ou brillant et adaptée au contrôle de l'énergie superficielle de décollement de la première couche appliquée par la suite sur ledit substrat de coulée (1) ;
   - ledit film de résine thermoplastique (2) est un film de résine élastomère non auto-porteur comprenant une ou des couches sur le substrat de coulée (1) et fixé sur celui-ci par des moyens comprenant des forces d'attraction entre ledit film de résine (2) et ledit substrat de coulée (1), ou ledit substrat de coulée (1) ayant une surface à anti-adhérence réglée, pour former une nappe composite (5), ledit film de résine (2) ayant une épaisseur de 0,75 à 25 µm, ledit film de résine (2) ne présentant pas de bords visibles après la redécoration ; en ce que ledit adhésif (4) comprend un mélange intime d'une quantité efficace d'une matière produisant une faible valeur de décollement au bout de zéro minute, afin que ledit stratifié puisse être facilement appliqué sur un substrat à décorer et retiré et remis en place ou redressé, le cas échéant, et ensuite fournisse une augmentation de la valeur de décollement au cours du temps pour assurer que ledit adhésif (4) possède un niveau d'énergie de décollement ultime supérieur aux forces d'attraction entre ledit film de résine (2) et ledit substrat de coulée (1), ou ledit substrat (1) ayant une surface à anti-adhérence réglée, ledit adhésif (4) étant placé du côté film de résine de ladite nappe composite (5) opposé audit substrat de coulée (1) ; et en ce que
   - il comprend en outre, éventuellement, un support temporaire en contact avec ledit adhésif (4), ledit support étant conçu par la suite pour être décollé dudit adhésif (4), afin que ladite nappe composite (5) convienne au montage sur un substrat
   destiné à être décoré, après avoir au préalable décollé tout support temporaire facultatif de celle-ci, et ledit substrat de coulée (1) peut être, selon le souhait de l'utilisateur, séparé dudit film de résine (2) par une force de décollement qui permet cette séparation, sans décoller en même temps ledit film de résine (2) du substrat à décorer, et ledit film de résine (2) peut être recouvert d'un ou de plusieurs revêtements résistants à l'abrasion.

2. Stratifié selon la revendication 1, qui est enroulé sur lui-même et ne comprend pas ledit support temporaire facultatif, ledit adhésif (4) étant en outre caractérisé en ce qu'il possède une énergie de liaison d'une valeur inférieure à celle du côté dudit substrat de coulée (1) qui n'est pas recouvert par ledit film de résine (2), afin que lorsqu'il est enroulé sur lui-même, ledit adhésif (4) reste sur ledit film de résine (2) sans être transféré sur le côté sans film de résine de ladite nappe composite (5).

3. Stratifié selon la revendication 1, caractérisé en ce qu'il n'est pas enroulé sur lui-même et en ce qu'il comprend ledit support temporaire facultatif.

4. Stratifié selon la revendication 1, dans lequel ledit substrat de coulée (1) comprend un film de papier ou de polymère.

5. Stratifié selon la revendication 4, dans lequel ledit polymère est choisi parmi le polyéthylène, le polypropylène, le poly(chlorure de vinyle), le polyester, le polyuréthane, le polyacrylate, le polycarbonate, le polyamide, un caoutchouc synthétique ou un mélange de tout polymère précédent.

6. Stratifié selon la revendication 1, dans lequel ladite force de décollement entre ledit substrat de coulée (1), ou ledit substrat de coulée (1) ayant une surface à anti-adhérence réglée, et ledit film de résine (2) est d'environ 2 à environ 39 grammes par cm (5 à environ 100 grammes par pouce) de largeur, et le niveau d'énergie d'adhérence dudit adhésif (4) est supérieur à la force de décollement entre ledit substrat de coulée (1), ou ledit substrat de coulée (1) ayant une surface à anti-adhérence réglée, et ledit film de résine (2).

7. Stratifié selon la revendication 6, dans lequel ladite force de décollement entre ledit substrat de coulée (1), ou ledit substrat de coulée (1) ayant éventuellement une surface à anti-adhérence réglée, et ledit film de résine (2) est d'environ 7,9 à environ 23,6 grammes par cm (20 à environ 60 grammes par pouce) de largeur.

8. Stratifié selon la revendication 1, dans lequel ledit adhésif (4) est choisi dans le groupe constitué par un adhésif autocollant, un adhésif thermoactivé et un adhésif pouvant être réhumecté.

9. Stratifié selon la revendication 1, dans lequel ladite matière produisant une faible valeur de décollement au bout de zéro minute comprend un polysiloxane et ladite matière est présente en une proportion d'environ 0,001 à environ 20% par rapport à la teneur en matières solides dudit adhésif autocollant.

10. Stratifié selon la revendication 1, dans lequel ledit film de résine (2) comprend un acrylique, un polyester, un poly(chlorure de vinyle), un caoutchouc synthétique, un polyuréthane ou un mélange de ces composés quelconques, déposée à partir d'un solvant organique ou d'un milieu à base d'eau sur ledit substrat de coulée (1), et durci par de la chaleur, un faisceau d'électrons ou une lumière ultraviolette.

11. Stratifié selon la revendication 1, dans lequel ledit film de résine (2) est transparent de sorte que, lorsque ledit substrat de coulée (1) est retiré, la couleur ou toute marque sur le substrat à décorer est visible.

12. Stratifié selon la revendication 1, dans lequel ledit film de résine (2) est transparent et le côté film de résine de ladite nappe composite (5) est imprimé à l'envers avec une ou plusieurs couleurs avec des marques décoratives avant l'application dudit adhésif (4).

13. Stratifié selon la revendication 12, dans lequel ledit côté film de résine de la nappe composite (5) est imprimé à l'envers avec une ou plusieurs couleurs avec un motif de marques décoratives de sorte que les zones transparentes non imprimées demeurent de sorte que la couleur ou toute marque imprimée dans ledit substrat à décorer est visible.

14. Stratifié selon la revendication 1, dans lequel ledit film de résine (2) est un film mince pigmenté opaque plein et la surface décorée a l'aspect d'une peinture sèche.

15. Procédé pour la préparation d'un stratifié autocollant de couverture de surfaces décoratives sous forme de feuille pour les murs, les étagères, les meubles, l'ameublement d'une maison, le sol et analogues, comprenant un substrat de coulée, un film de résine thermoplastique fixé sur le substrat de coulée de façon à former une nappe composite et un adhésif placé du côté résine de la nappe composite, caractérisé en ce qu'il comprend les étapes consistant à :

(a) se munir d'un substrat de coulée (1) ;
(b) fournir, éventuellement, une surface à anti-adhérence réglée sur ledit substrat de coulée (1) fournissant un fini brillant, un fini mat ou un revêtement détachable, ladite surface étant adaptée au contrôle de l'énergie superficielle de décollement de la couche appliquée par la suite sur ledit substrat de coulée (1) ;
(c) fixer un film de résine thermoplastique élastomère non auto-porteur (2) comprenant une ou des couches déposées à partir d'un milieu liquide sur un côté dudit substrat de coulée (1) pour former une nappe composite (5) par des moyens comprenant des forces d'attraction entre ledit film de résine (2) et ledit substrat de coulée (1), ou ledit substrat de coulée (1) ayant une surface à anti-adhérence réglée, dans des conditions qui permettent la séparation dudit substrat de coulée (1) du film de résine (2) lors de l'application d'une force de décollement, ledit film de résine (2) ayant une épaisseur de 0,75 à 25 µm ;
(d) appliquer un adhésif (4) sur le côté film de résine de ladite nappe composite (5) opposé audit substrat de

15

coulée (1), ledit adhésif (4) comprenant un mélange intime d'une quantité efficace d'une matière produisant une faible valeur de décollement au bout de zéro minute, afin que ledit stratifié puisse être facilement appliqué sur un substrat destiné à être décoré et retiré et remis en place ou redressé, le cas échéant, et ensuite fournisse une augmentation de la valeur de décollement au cours du temps pour assurer que ledit adhésif (4) possède un niveau d'énergie de décollement ultime supérieur aux forces d'attraction entre ledit film de résine (2) et ledit substrat de coulée (1), ou ledit substrat (1) ayant une surface à anti-adhérence réglée ; et

(e) éventuellement appliquer un support temporaire en contact avec ledit adhésif (4), ledit support étant conçu par la suite pour être décollé dudit adhésif (4), afin que ladite nappe composite (5) convienne au montage sur un substrat à décorer, après avoir au préalable décollé tout support temporaire facultatif de celle-ci, et ledit substrat de coulée (1) peut être, selon le souhait de l'utilisateur, séparé dudit film de résine (2) par une force de décollement qui permet cette séparation, sans décoller en même temps ledit film de résine (2) du substrat à décorer, et ledit film de résine (2) peut être recouvert d'un ou de plusieurs revêtements résistants à l'abrasion.

16. Procédé selon la revendication 15, dans lequel ledit stratifié produit est enroulé sur lui-même et ne comprend pas ledit support temporaire facultatif, ledit adhésif (4) étant en outre caractérisé en ce qu'il possède une énergie de liaison d'une valeur inférieure à celle du côté dudit substrat de coulée (1) qui n'est pas recouvert par ledit film de résine (2), afin que lorsqu'il est enroulé sur lui-même, ledit adhésif (4) reste sur ledit film de résine (2) sans être transféré sur le côté sans film de résine de ladite nappe composite (5).

17. Procédé selon la revendication 15, dans lequel ledit stratifié n'est pas enroulé sur lui-même et comprend ledit support temporaire.

18. Procédé selon la revendication 15, dans lequel ledit stratifié de coulée (1) comprend un film de papier ou de polymère.

19. Procédé selon la revendication 18, dans lequel ledit polymère est choisi parmi le polyéthylène, le polypropylène, le poly(chlorure de vinyle), le polyester, le polyuréthane, le polyacrylate, le polycarbonate, le polyamide, un caoutchouc synthétique ou un mélange comprenant tout polymère précédent.

20. Procédé selon la revendication 15, dans lequel ladite force de décollement entre ledit substrat de coulée (1), ou ledit substrat de coulée (1) ayant une surface à anti-adhérence réglée, et ledit film de résine (2) est d'environ 2 à environ 39 grammes par cm (5 à environ 100 grammes par pouce) de largeur, et le niveau d'énergie d'adhérence dudit adhésif (4) est supérieur à la force de décollement entre ledit substrat de coulée (1) et ledit film de résine (2).

21. Procédé selon la revendication 20, dans lequel ladite force de décollement entre ledit substrat de coulée (1) et ledit film de résine (2) est d'environ 7,9 à environ 23,6 grammes par cm (20 à environ 60 grammes par pouce) de largeur.

22. Procédé selon la revendication 15, dans lequel ledit adhésif (4) est choisi dans le groupe constitué par un adhésif autocollant, un adhésif thermoactivé et un adhésif pouvant être réhumecté.

23. Procédé selon la revendication 15, dans lequel ladite matière produisant une faible valeur de décollement au bout de zéro minute comprend un polysiloxane et ladite matière est présente en une proportion d'environ 0,001 à environ 20% par rapport à la teneur en matières solides dudit adhésif autocollant.

24. Procédé selon la revendication 15, dans lequel ledit film de résine (2) comprend un acrylique, un polyester, un poly(chlorure de vinyle), un caoutchouc synthétique, un polyuréthane ou un mélange de ces composés quelconques, déposée à partir d'un solvant organique ou d'un milieu à base d'eau sur ledit substrat de coulée (1), ou sur le substrat de coulée (1) ayant ladite surface à anti-adhérence réglée, et durci par de la chaleur, un faisceau d'électrons ou une lumière ultraviolette.

25. Procédé selon la revendication 15, dans lequel ledit film de résine (2) est transparent de sorte que lorsque ledit substrat de coulée (1) est retiré, la couleur ou toute marque imprimée sur le substrat à décorer est visible.

26. Procédé selon la revendication 15, dans lequel ledit film de résine (2) est transparent et le côté film de résine de ladite nappe composite (5) est imprimé à l'envers avec une ou plusieurs couleurs avec des marques décoratives avant l'application dudit adhésif (4).

27. Procédé selon la revendication 26, dans lequel ledit côté film de résine de la nappe composite (5) est imprimé à l'envers avec une ou plusieurs couleurs avec un motif de marques décoratives de sorte que les zones transparentes non imprimées demeurent de sorte que la couleur ou toute marque imprimée dans ledit substrat à décorer soit visible.

28. Procédé selon la revendication 15, dans lequel ledit film de résine (2) est un film mince pigmenté opaque plein et la surface décorée a l'aspect d'une peinture sèche.

# FIG. 1

| REMOVABLE CASTING SUBSTRATE |
|---|
| THIN NON-SELF SUPPORTING RESIN FILM |
| ADHESIVE |
| OPTIONAL, TEMPORARY, RELEASE LINER |

# FIG. 2

# FIG. 3

# FIG. 4

CURING SYSTEMS: INFRA RED, HOT FORCED AIR, ELECTRON BEAM,
ULTRA VIOLET OVEN, TYPICAL ALL SEVEN (7) COATING/PRINTING STATIONS)

CLEAR FILM

UNWIND FILM

RELEASE COAT
(MATT,GLOSS
FILM FORMING
HIGH ENERGY
RELEASE COAT)

TOPCOAT
ELASTOMERIC
CONFORMABLE

INCLUDES
ACRYLICS
POLYESTERS
POLYURETHANES
CLEAR FILM RELEASE 2X
PAPER RELEASE        1X (RELATIVE TO FILM 1/2)

PRINTING 4 COLORS
PRIMARY OR OTHER
(COULD BE EXPANDED TO 10 UNITS)

ADHESIVE
COAT
PRESSURE
SENSITIVE

LAMINATED NIP
SECTION

WINDUP
FINISH
PRODUCT

ALTERNATIVE
WINDUP
FOR SELF
WOUND
PRODUCT

EP 0 569 921 B1